# EUROPÄISCHE PATENTSCHRIFT

(11) **EP 3 873 762 B1**
(45) Veröffentlichungstag und Bekanntmachung des Hinweises auf die Patenterteilung: **16.03.2022**
(21) Anmeldenummer: 19748769.7
(22) Anmeldetag: 25.07.2019
(51) Int. Cl.: B60L 5/04, B60L 5/12, B60M 1/06, H01R 41/00, B60M 1/30, H01Q 13/22

(54) **STROMABNEHMER, SCHLEIFLEITUNG UND SCHLEIFLEITUNGSSYSTEM**
CURRENT COLLECTOR, CONDUCTOR LINE AND CONDUCTOR LINE SYSTEM
RÉCEPTEUR DE COURANT, LIGNE DE CONTACT ET SYSTÈME DE LIGNE DE CONTACT

(30) Priorität: 31.10.2018 DE 102018127304
(43) Veröffentlichungstag der Anmeldung: 08.09.2021
(73) Patentinhaber: Conductix-Wampfler GmbH, 79576 Weil am Rhein (DE)
(72) Erfinder: ENDLER, Niklas, 79739 Schwörstadt (DE); MAIER, Bernd, 79418 Schliengen (DE); WINTER, Nicholas, 79540 Lörrach (DE)
(74) Vertreter: Charrier Rapp & Liebau
(86) Internationale Anmeldenummer: PCT/EP2019/070006
(87) Internationale Veröffentlichungsnummer: WO 2020/088806

(56) Entgegenhaltungen:
- DE-A1-102014 107 466
- DE-A1-102015 120 345
- DE-A1-102016 102 912
- DE-A1-102016 103 919
- HARALD DALICHAU: "Übergänge und Fahrzeugkoppler fur Schlitzhohlleiterstrecken Adapters and Vehicle-Couplers for Slotted Waveguide Systems", FREQUENZ, Bd. 36, Nr. 6, 1. Januar 1982 (1982-01-01) , Seiten 169-175, XP055629248,

## Beschreibung

Die Erfindung betrifft einen Stromabnehmer nach dem Oberbegriff des Anspruchs 1, eine Schleifleitung nach dem Oberbegriff des Anspruchs 10 und ein Schleifleitungssystem nach dem Oberbegriff des Anspruchs 14.

Aus der gattungsgemäßen DE 10 2014 107 466 A1 ist ein Schleifleitungssystem mit einer Schleifleitung bekannt, aus der längs der Schleifleitung verfahrende elektrische Verbraucher über Schleifkontakte eines Stromabnehmers mit elektrischer Energie versorgt werden. Dabei ist ein Leiterprofil der Schleifleitung als Baueinheit aus Erdungsleiterprofil und Schlitzhohlleiter für die Datenübertragung von und zu dem elektrischen Verbraucher ausgebildet. Ein entsprechender Stromabnehmer weist hierzu einerseits einen Schleifkontakt zum Kontakt mit dem Erdungsleiterprofil und andererseits eine Antenne zum Eingriff in den Schlitzhohlleiter auf welche als Baueinheit ausgebildet sind. Der Schleifkontakt wird dabei ständig federnd in Richtung des Erdungsleiterprofils gedrückt, um einen unterbrechungsfreien Kontakt mit dem Leiterprofil zu gewährleisten. Da sich der Schleifkontakt im Lauf der Zeit abnutzt, dringt die Antenne immer weiter in den Schlitzhohlleiter ein, wodurch sich die Übertragungseigenschaften im Schlitzhohlleiter sukzessive ändern, so dass die Datenübertragung beeinträchtigt werden kann. Oft werden von einer Schleifleitung auch mehrere elektrische Verbraucher versorgt, beispielsweise bei Elektrohängebahnen, so dass sic h bei ständig ändernden Eindringtiefen der Antennen der Verbraucher in den Schlitzhohlleiter die Dämpfungseigenschaften verändern, so dass sich die Datenübertragung verschlechtert, beispielsweise zeitweilig übersteuert, zeitweilig untersteuert.

Die FR 2 952 237 A1 offenbart im Bereich des Zubehörs für flexible Funkantennen ein Gerät, das eine Anschlageinheit in der Nähe einer flexiblen Fixiereinheit hat, wobei die Anschlageinheit die Bewegung einer flexiblen Funkantenne in Bezug auf einen Träger, der in eine Struktur integriert ist, z. b. ein Fahrzeug, begrenzt. Die Anschlageinheit hat einen Metallzylinder, der die Antenne in Höhe der Fixiereinheit umschließt. Der Zylinder hat einen Bodenteil, an dem eine axiale Bohrung ausgebildet ist, welche die Zentrierung der Antenne und die Fixierung der Antenne am Träger ermöglicht. Die Fixiereinheit hat eine Feder, die mit einer Basis verbunden ist, die durch eine Mutter an dem Träger befestigt ist.

Die DE 10 2016 102 912 A offenbart eine Schleifleitung mit einer Schleifleitungsschiene, die durch ein stranggepresstes geschlitztes Hohlprofil gebildet ist, wobei Seitenwandungen den geschlitzten Hohlraum begrenzen und die Schleifleitungsschiene mindestens eine Lauf- und/oder Führungsfläche für einen entlang der Schleifleitung verfahrbaren Stromabnehmerwagen bildet, wobei mindestens eine elektrische Stromschiene zur Energie- und/oder Datenübertragung an der Innenseite zumindest einer den Hohlraum begrenzenden Seitenwandung des Hohlprofils angeordnet ist, und wobei in dem Hohlraum, oder in mindestens einer Seitenwandung mindestens ein elektrischer Schlitzhohlleiter angeordnet bzw. integriert ist.

Die DE 10 2016 103 919 A1 offenbart eine Datenübertragungsvorrichtung mit einem länglichen Hohlprofil mit einem in eine Längsrichtung des Hohlprofils verlaufenden Hohlraum und einem in Längsrichtung verlaufenden Längsschlitz und einer Sende- und/oder Empfangseinheit sowie eine Vorrichtung zum konduktiven Übertragen elektrischer Energie zwischen einer Ladestation und einem gegenüber der Ladestation beweglichen Verbraucher , wobei die Vorrichtung einen Ladekopf mit Kontaktelementen zur Herstellung einer elektrischen Verbindung zwischen Verbraucher und Ladestation aufweist. Dabei sind das Hohlprofil und/oder die Sende- und/oder Empfangseinheit zum Ein- und Ausfahren der Sende- und/oder Empfangseinheit in den Längsschlitz des Hohlprofils in mindestens einer Zustellrichtung mittels einer Zustellvorrichtung zueinander bewegbar.

Die DE 10 2015 120 345 A1 offenbart eine Einführungseinrichtung zum Einführen mindestens einer an einem Laufwagen angeordneten Antenne in einen Schlitz eines Schlitzhohlleiters , wobei der Laufwagen an einer mobilen Einheit beweglich angelagert ist, dadurch gekennzeichnet, dass die Einführungseinrichtung eine Führungsvorrichtung aufweist, die mit ihrem einen ersten Ende an dem freien Ende des Schlitzhohlleiters in Verbindung ist, wobei das andere Ende der Führungsvorrichtung verschieblich an einer Basisvorrichtung gelagert ist, wobei die Führungsvorrichtung mindestens eine Führungskurve , insbesondere Führungsfläche, für den Laufwagen aufweist.

Aufgabe der Erfindung ist es deshalb, einen Stromabnehmer, eine Schleifleitung sowie ein Schleifleitungssystem bereitzustellen, welche die oben genannten Nachteile überwinden und eine möglichst gleichbleibende, ungestörte Datenübertragung ermöglichen Die Erfindung löst die Aufgabe durch einen Stromabnehmer mit den Merkmalen des Anspruchs 1, eine Schleifleitung mit den Merkmalen des Anspruchs 10 sowie ein Schleifleitungssystem mit den Merkmalen des Anspruchs 14. Vorteilhafte Weiterbildungen und Ausgestaltungen der Erfindung sind in den Unteransprüchen angegeben.

Der eingangs genannte Stromabnehmer ist erfindungsgemäß dadurch gekennzeichnet, dass zwischen Schleifkontakt und Antenne mindestens ein Ausgleichselement vorgesehen ist, das die Antenne in Zustellrichtung zur Schleifleitung hin drückt, zugleich aber die Ausweichbewegung der Antenne und des Abstandshalters gegenüber dem Schleifkontakt gegen die Zustellrichtung zur Schleifleitung hin ermöglicht. Kommt der Schleifkontakt immer näher an das Leiterprofil, bleibt die Antenne dennoch in gleichbleibender Eindringtiefe im Längsschlitz und/oder Hohlraum des Leiterprofils, da sich nur der Schleifkontakt in Zustellrichtung zur Schleifleitung hin bewegt, während die Antenne und der Antennenhalter in Zustellrichtung in der gleichen Stellung gegenüber der Schleifleitung bleiben.

Dabei kann die Antenne bevorzugt bei einer Bewegung des Schleifkontakts in Zustellrichtung zur Schleifleitung hin in die Gegenrichtung beweglich gelagert sein, also in Zustellrichtung von der Schleifleitung weg. Hierdurch wird einerseits ein Andrücken des Schleifkontakts an das Leiterprofil ermöglicht, um einen zuverlässigen elektrischen Kontakt sicherzustellen, und andererseits kann bei verschleißbedingter Abnahme der Höhe des Schleifkontakts und dadurch bedingter weiteren Annäherung des Schleifkontakts zur Schleifleitung hin ein Ausweichen der Antenne gegen die Bewegung des Schleifkontakts in Zustellrichtung zur Schleifleitung hin erreicht werden.

Dabei ist die Antenne in einem in Zustellrichtung gegenüber dem Schleifkontakt beweglichen Antennenhalter angeordnet. Um eine definierte und gleichbleibende Eindringtiefe der Antenne in den Längsschlitz und/oder den Hohlraum des Leiterprofils möglichst gut zu erreichen, ist an dem Antennenhalter mindestens ein Abstandselement, insbesondere ein Abstandsgleitstück oder eine Abstandsrolle, zum Gleiten oder Rollen an dem Leiterprofil angeordnet. Durch das Andrücken des Schleifkontakts und des Abstandsgleitstücks an das Leiterprofil und den gegenüber dem Schleifkontakt gemeinsam mit der Antenne gegen die Annäherung des Schleifkontakts in Zustellrichtung an das Leiterprofil gerichtete mögliche Ausweichbewegung des Antennenhalters kann die Antenne vorteilhaft in der gewünschten, gleichbleibenden Eindringtiefe gehalten werden.

Bevorzugt können an dem Antennenhalter zwei auf einander gegenüberliegenden Seiten seitlich der Antenne angeordnete Abstandsgleitstücke angeordnet sein, welche bevorzugt in Längsrichtung ausgerichtet sind. Bevorzugt können die Abstandsgleitstücke abgeschrägte Stirnseiten aufweisen, welche an entsprechend abgeschrägten Abstandsgleitflächen am äußeren Ende des Längsschlitzes gleiten.

Bevorzugt kann der Schleifkontakt in einem Schleifkontaktträger angeordnet sein, wobei das Ausgleichselement zwischen Schleifkontaktträger und Antenne und/oder Antennenhalter vorgesehen ist. Dann wird der Schleifkontakthalter mit dem Schleifkontakt in Zustellrichtung an das Leiterprofil gedrückt, während Antennenhalter und Antenne in Zustellrichtung in derselben Stellung gegenüber dem Leiterprofil bleiben. Das Ausgleichselement lässt somit eine Änderung des Abstands zwischen Schleifkontaktträger und Antenne bzw. Antennenhalter zu, insbesondere in Zustellrichtung.

Bevorzugt kann das Ausgleichselement mindestens ein elastisches Element und/oder eine Ausgleichsfeder umfassen, welche zwischen Schleifkontakt bzw. Schleifkontakthalter und Antenne bzw. Antennenhalter wirkt. Das elastische Element kann vorteilhaft aus Gummi, insbesondere Weichgummi bestehen.

In einer vorteilhaften Weiterbildung kann die Zustellvorrichtung bei Auslenkung des Schleifkontakts aus seiner Kontaktstellung am Leiterprofil in Zustellrichtung vom Leiterprofi l weg eine Rückstellkraft auf den Schleifkontakt bzw. den Schleifkontaktträger in Zustellrichtung zum Leiterprofil hin ausüben. Bevorzugt kann die Zustellvorrichtung einen an sich bekannten Federarm aufweisen.

In einer günstigen Weiterbildung kann die Antenne zumindest in ihrem zum Eingreifen in den Längsschlitz vorgesehenen Bereich von einer elektrisch isolierenden Schutzhülle umgeben sein, um einen elektrischen Kontakt mit dem Längsschlitz zu vermeiden.

Vorteilhaft kann die Zustellrichtung senkrecht auf einer durch die Längsrichtung verlaufenden Verfahrebene des Stromabnehmers verlaufen. Dabei kann die Zustellrichtung im wesentlichen in einer durch den Längsschlitz, insbesondere seiner Höhenerstreckung, und die Längsrichtung gebildeten Schlitzebene verlaufen.

Die eingangs genannte Schleifleitung ist erfindungsgemäß dadurch gekennzeichnet, dass das Leiterprofil mindestens eine in Längsrichtung verlaufende Abstandsgleitfläche für mindestens ein Abstandselement des wie oben und nachfolgend beschriebenen Stromabnehmers aufweist. Dabei können vorteilhaft zwei Abstandsgleitflächen auf einander gegenüberliegenden Seiten seitlich des Längsschlitzes angeordnet sein. Bevorzugt können die Abstandsgleitflächen schräg vom Längsschlitz weg nach außen verlaufen, so dass die äußeren Kanten des Längsschlitzes abgeschrägt sind. Bevorzugt können der Hohlraum und der Längsschlitz einen Schlitzhohlleiter ausbilden. In einer vorteilhaften Fortbildung kann die Abstandsgleitfläche auch an oder durch eine Schleifkontaktnut des Leiterprofils gebildet werden, wobei dann bevorzugt die Abstandsgleitstücke in Längsrichtung vor und/oder hinter den Schleifkontakten angeordnet sind. Bevorzugt kann das Leiterprofil ein Erdungsleiterprofil sein.

Vorteilhaft können das Leiterprofil und der Schlitzhohlleiter einstückig aus dem gleichen Material als Baueinheit gefertigt sein. Sie können aber auch aus separaten Teilen und/oder unterschiedlichen Materialien als Einzelteile oder Baueinheit gefertigt werden. Bevorzugt können das Leiterprofil bzw. der Schlitzhohlleiter aus einem elektrisch leitfähigen Material hergestellt sein und/oder eine elektrisch leitfähige Beschichtung aufweisen. Insbesondere kann der Schlitzhohlleiter innen eine elektrisch leitfähige Beschichtung aufweisen. Auch kann der Schlitzhohlleiter einen anderen geeigneten Querschnitt aufweisen.

Das eingangs genannte Schleifleitungssystem ist erfindungsgemäß dadurch gekennzeichnet, dass zwischen Schleifkontakt und Antenne mindestens ein Ausgleichselement vorgesehen ist, das die Antenne in Zustellrichtung zur Schleifleitung hin drückt, wobei die Antenne in einem in Zustellrichtung gegenüber dem Schleifkontakt beweglichen Antennenhalter angeordnet ist, und wobei an dem Antennenhalter mindestens ein Abstandselement zum Gleiten oder Rollen an dem Leiterprofil angeordnet ist. Dabei kann die Antenne bevorzugt bei einer Bewegung des Schleifkontakts in Zustellrichtung zur Schleifleitung hin in die Gegenrichtung beweglich gelagert sein, also in Zustellrichtung von der Schleifleitung weg. Bevorzugt kann dabei ein wie oben und nachfolgend beschriebener Stromabnehmer und/oder Schleifleitung verwendet werden.

Die Erfindung wird nachfolgend anhand von detaillierten Ausführungsbeispielen mit Bezug auf die begleitenden Zeichnungen beschrieben. Diese zeigen:
- **Fig. 1**: eine Vorderansicht auf einen Abschnitt eines erfindungsgemäßen Schleifleitungssystems;
- Fig. 2: eine Seitenansicht auf das Schleifleitungssystems aus Fig. 1 von links;
- Fig. 3: eine Schnittansicht durch das Schleifleitungssystem längs der Schnittlinie B-B in Fig. 2;
- Fig. 4: eine Schnittansicht durch das Schleifleitungssystem längs der Schnittlinie A-A in Fig. 1.

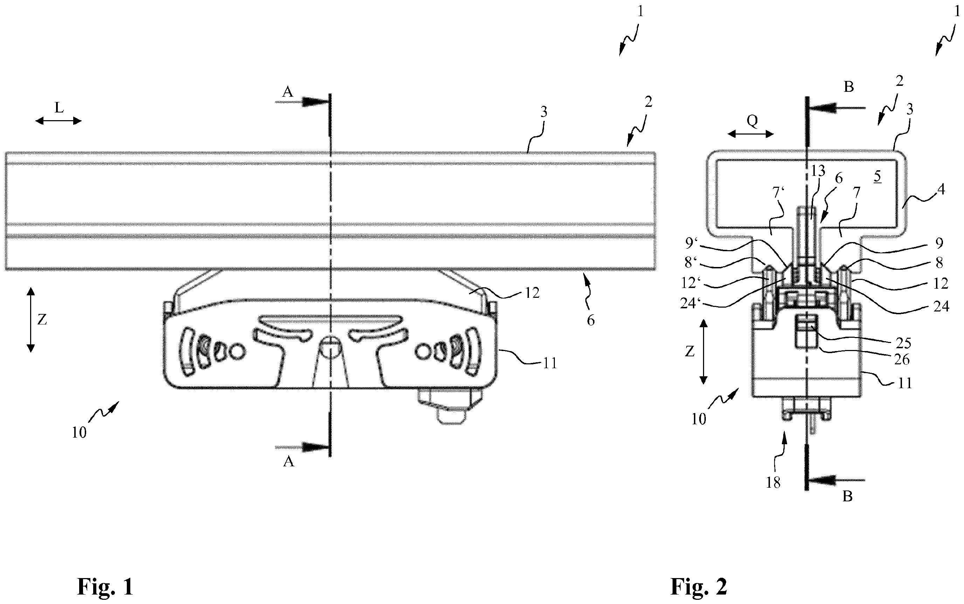

Fig. 1 zeigt eine Vorderansicht auf einen Abschnitt eines erfindungsgemäßen Schleifleitungssystems 1 mit einer in eine Längsrichtung L verlaufenden Schleifleitung 2, an der in an sich bekannter Weise elektrische Verbraucher, beispielsweise ein Containerkran, in Längsrichtung L verfahrbar sind. Diese werden über in den Zeichnungen nicht gezeigte Phasenleiterprofile mit elektrischer Energie versorgt, wobei die Erfindung grundsätzlich auch bei einem solchen Phasenleiterprofil zum Einsatz kommen kann.

Ein in den Zeichnungen gezeigtes längliches, elektrisch leitfähiges Erdungsleiterprofil 3 dient zur Verbindung des elektrischen Verbrauchers mit dem Erdpotential des einen in den Zeichnungen nach unten geöffneten Längsschlitz 6 übergeht. Das Erdungsleiterprofil 3 kann aber auch mit sich seitlich öffnendem Längsschlitz 6 verwendet werden.

Das Erdungsleiterprofil 3 und der Schlitzhohlleiter 4 sind vorliegend einstückig aus dem gleichen Material gefertigt und bilden somit eine Baueinheit, wodurch die Fertigung und der Einbau vereinfacht werden können. Das Erdungsleiterprofil 3 und der Schlitzhohlleiter 4 können aber auch aus separaten Teilen und/oder unterschiedlichen Materialien als Einzelteile oder Baueinheit gefertigt werden. Dabei sind das Erdungsleiterprofil 3 bzw. der Schlitzhohlleiter 4 aus einem elektrisch leitfähigen Material hergestellt oder weisen eine elektrisch leitfähige Beschichtung auf. Insbesondere kann der Schlitzhohlleiter 4 innen eine elektrisch leitfähige Beschichtung aufweisen. Auch kann der Schlitzhohlleiter 4 einen anderen geeigneten Querschnitt aufweisen.

Weiter weist das Erdungsleiterprofil 3 auf beiden Seiten seitlich neben dem Längsschlitz 6 angeordnete Längsstege 7, 7' auf, in denen mit Abstand zum Längsschlitz 6 in Längsrichtung L verlaufende Schleifkontaktnuten 8, 8' vorgesehen sind. Unmittelbar an den äußeren Längskanten des Längsschlitzes 6 sind nach außen abgeschrägte Abstandsgleitflächen 9, 9' vorgesehen.

An dem nicht gezeichneten elektrischen Verbraucher ist in an sich bekannter Weise ein Stromabnehmer 10 angeordnet, welcher in einem Schleifkontaktträger 11 zwei Schleifkontakte 12, 12' hält. Die Schleifkontakte 12, 12' sind parallel zur Längsrichtung L außermittig des Schleifkontaktträgers 11 angeordnet und greifen mit ihren freien, keilförmigen Enden in die Schleifkontaktnuten 8 bzw. 8' ein. Anstelle der keilförmigen Ausgestaltung können aber auch andere Querschnitte von Schleifkontaktnuten 8, 8' bzw. Schleifkontakten 12, 12' gewählt werden.

Der Stromabnehmer 10 wird über eine an sich bekannte, nicht gezeichnete Zustellvorrichtung beständig in Richtung der Schleifleitung 2 gedrückt, um einen sicheren Kontakt zwischen den Schleifkontaktnuten 8, 8' und den Schleifkontakten 12, 12' zu gewährleisten. Abgenutzte Schleifkontakte 12, 12' können über die Zustellvorrichtung oder anderweitig auch von der Schleifleitung 2 wegbewegt werden.

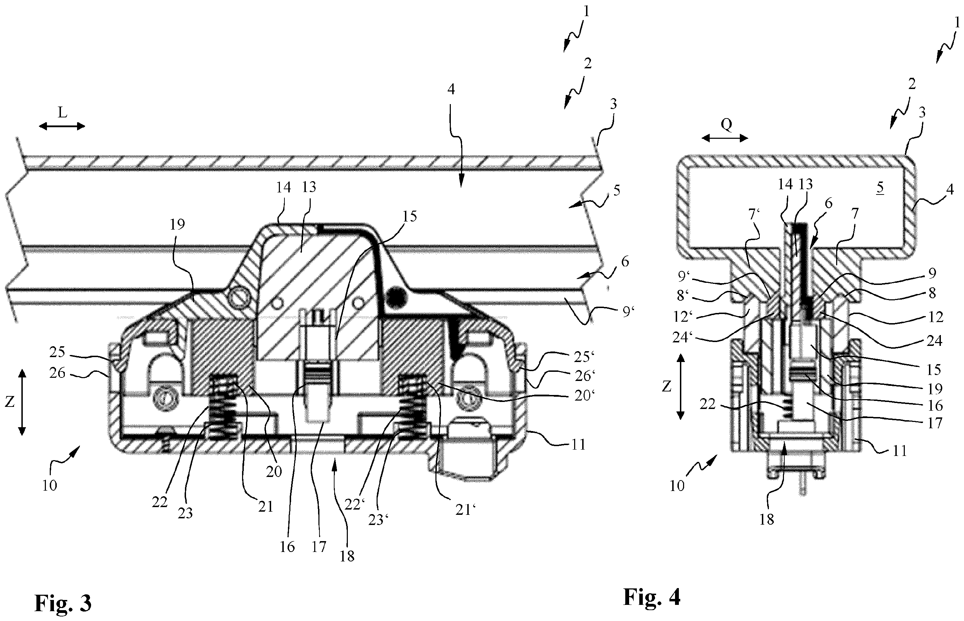

Eine elektrisch leitfähige Antenne 13 des Stromabnehmers 10 reicht durch den Längsschlitz 6 in den Hohlraum 5 des Schlitzhohlleiters 4. Wie in Fig. 4 gut erkennbar, ist die Antenne 13 von einer isolierenden Schutzhülle 14 umgeben, um einen elektrischen Kontakt zwischen Antenne 13 und Schlitzholleiter 4 zu vermeiden. Weiter weist die Antenne 13 auf ihrem der Schleifleitung 2 abgewandten Seite eine Antennenbuchse 15 auf, in die ein Antennenstecker 16 einer Antennenleitung 17 eingesteckt werden kann. Die Antennenleitung 17 verläuft durch eine Durchgangsöffnung 18 des Stromabnehmers 10 zu dem elektrischen Verbraucher bzw. dessen Steuerung.

Um zu verhindern, dass die Antenne 13 bei zunehmend verschleißenden Schleifkontakten 12, 12' durch den Stromabnehmer 10 immer weiter in den Hohlraum 5 des Schlitzhohleiters 4 bewegt wird, ist die Antenne 13 in einem gegenüber dem Schleifkontaktträger 11 in eine Zustellrichtung Z zur Schleifleitung 2 beweglichem Antennenhalter 20 angeordnet. Der Antennenhalter 20 umfasst auch die Schutzhülle 14.

Der Antennenhalter 20 weist dabei zwei in Längsrichtung L vor bzw. hinter der Antenne 13 angeordnete Federblöcke 20, 20' auf, die an ihrer der Schleifleitung 2 abgewandten Seite jeweils eine Federaufnahme 21, 21' in Form einer Vertiefung aufweisen. In die Federaufnahmen 21, 21' ist jeweils ein Ende einer hier als Spiralfeder ausgebildeten Ausgleichsfeder 22, 22' eingesetzt, während das jeweils andere Ende der Ausgleichsfedern 22, 22' in jeweils einer hülsenförmig ausgebildeten Federaufnahme 23, 23' am Schleifkontaktträger 11 eingesetzt ist. Die Federaufnahmen 21, 21' bzw. 23, 23' können aber auch anders ausgestaltet sein, beispielsweise als Dorne, auf die die Ausgleichsfedern 22, 22' endseitig aufgesteckt sind. Auch können andere Arten von Ausgleichsfedern 22, 22' verwendet werden. Auch kann ggf. nur eine Ausgleichsfeder vorgesehen werden.

Weiter weist der Antennenhalter 19 zwei quer zur Längsrichtung L und zur Zustellrichtung Z, also in Querrichtung Q angeordnete, als Abstandsgleitstücke 24, 24' ausgebildete Abstandselemente auf, welche an den Abstandsgleitflächen 9, 9' entlanggleiten. Dabei weisen die Abstandsgleitstücke 24, 24' bevorzugt eine möglichst gut gleitende Anlagefläche an die Abstandsgleitflächen 9, 9' auf und können beispielsweise mit einer Beschichtung oder vollständig aus einem reibungsarmen Material bestehen, beispielsweise PTFE, Keramik, an sich bekannte Metalllegierungen etc. Weiter können die Abstandsgleitstücke 24, 24' bevorzugt aus einem verschleißarmen Material bestehen, um ein Eindringen der Antenne 13 in den Hohlraum 5 aufgrund des Verschleißes der Abstandsgleitstücke 24, 24' möglichst lange hinauszuzögern. Entsprechend können auch die Abstandsgleitflächen 9, 9' mit einem gut gleitenden, reibungsarmen und/oder verschleißarmen Material beschichtet oder aus diesem hergestellt sein.

Die Abstandsgleitstücke 24, 24' sind beidseits und bevorzugt symmetrisch zu einer durch die Längsrichtung L und die Zustellrichtung Z und den Längsschlitz 6 bzw. die Antenne 13 verlaufenden Schlitzebene bzw. Antennenebene angeordnet. Die Abstandsgleitstücke 24, 24' sind dabei stirnseitig von innen nach außen abgeschrägt, um einerseits in Zusammenwirkung mit den entsprechend abgeschrägten Abstandsgleitflächen 9, 9' die Zentrierung der Antenne 13 im Längsschlitz 6 zu verbessern, und andererseits, um die durch das mittels der Ausgleichsfedern 22, 22' bewirkte Andrücken der Abstandsgleitstücke 24, 24' an die Abstandsgleitflächen 9, 9' erzeugte Reibung zu reduzieren.

In einer alternativen, nicht gezeichneten Ausgestaltung der Erfindung kann anstelle der zwei symmetrisch ausgebildeten Abstandsgleitstücke 24, 24' nur ein einzelnes Abstandsgleitstück vorgesehen werden, welches dann bevorzugt in eine entsprechend ausgeformte Abstandsschleifnut eingreift. Diese kann ggf. ähnlich wie die Schleifkontaktnuten ausgebildet sein, um ein Herausspringen des einzelnen Abstandsgleitstücks aus der Abstandsschleifnut zu verhindern. Die beiden in Fig. 2 und 4 dargestellten Abstandsgleitstücke 24, 24' weisen jedoch den Vorteil auf, dass sie für eine Selbstzentrierung der Antenne sorgen und die Gefahr eines Herausspringens sicher vermeiden.

Das Abstandselement kann alternativ oder zusätzlich auch als Abstandsrolle bzw. -rollen ausgebildet sein. Dabei können die Abstandsrollen auf den abgeschrägten Abstandsgleitflächen 9, 9' rollen, oder es wird ganz auf die Abstandsgleitflächen 9, 9' verzichtet. Die Stege 7, 7' können dann senkrecht zur Zustellrichtung ausgebildete Rollflächen ausbilden, auf denen die Abstandsrollen abrollen können. Abstandsrollen haben den Vorteil, dass hier kein durch das Entlanggleiten hervorgerufener Abrieb stattfindet, wie bei den Abstandsgleitstücken 24, 24'.

Der Antennenhalter 19 ist im vorliegenden Ausführungsbeispiel über Schnappverbindungen mit dem Schleifkontaktträger 11 in Zustellrichtung Z beweglich verbunden, wobei hier Rastnasen 25, 25' des Antennenhalters 19 in entsprechende, in Zustellrichtung Z ausgerichtete Rastöffnungen 26, 26' greifen. Dabei sind die Rastöffnungen 26, 26' in Zustellrichtung so lang, dass die Rastnasen 25, 25' bei Bewegung des Schleifkontaktträgers 11 in Zustellrichtung Z zur Schleifleitung 2 hin in die Gegenrichtung ausweichen können, wobei durch die nach außen, zu den Rastöffnungen 26, 26' hin federnden Rastnasen 25, 25' keine Gefahr besteht, dass sich der Antennenhalter 19 von dem Schleifkontaktträger 11 löst.

Verringert sich durch Verschleiß die Höhe der Schleifkontakte 12, 12' in Zustellrichtung Z, so drückt die Zustellvorrichtung den gesamten Stromabnehmer 10 und insbesondere den Schleifkontaktträger 23, 23' zur Schleifleitung 2 hin an das Erdungsleiterprofil 3, um einen dauerhaften elektrischen Kontakt zwischen den Schleifkontaktnuten 8, 8' und den Schleifkontakten 12, 12' sicherzustellen. Im Gegensatz zu den bekannten Stromabnehmern wandert hier aber die Antenne 13 nicht mit den Schleifkontakten 12, 12' zur Schleifleitung 2 hin und dringt sukzessive tiefer in den Hohlraum 5 ein, sondern wird durch die Abstandsgleitstücke 24, 24' und die in Zustellrichtung Z gegenüber den Schleifkontakten 12, 12' bzw. dem Schleifkontaktträger 11 bewegliche Lagerung der Antenne 13 in gleichbleibendem Abstand zum bzw. gleichbleibender Position gegenüber dem Hohlraum 5 gehalten.

Hierdurch können die Datenübertragungseigenschaften des Schlitzhohlleiters 4 über einen langen Zeitraum weitgehend konstant gehalten werden, und erst nach Abnutzung der Abstandsgleitflächen 9, 9' und/oder der Abstandsgleitstücke 24, 24' tritt eine Verschlechterung ein.

### Bezugszeichenliste

- 1: Schleifleitungssystem
- 2: Schleifleitung
- 3: Erdungsleiterprofil
- 4: Schlitzhohlleiter
- 5: Hohlraum
- 6: Längsschlitz
- 7, 7': Längsstege
- 8, 8': Schleifkontaktnut
- 9, 9': Abstandsgleitflächen
- 10: Stromabnehmer
- 11: Schleifkontaktträger
- 12, 12': Schleifkontakte
- 13: Antenne
- 14: Schutzhülle Antenne
- 15: Antennenbuchse
- 16: Antennenstecker
- 17: Antennenleitung
- 18: Durchgangsöffnung Antennenleitung
- 19: Antennenhalter
- 20, 20': Federblöcke
- 21, 21': Federaufnahmen Antennenhalter
- 22, 22': Ausgleichsfedern Antennenhalter
- 23, 23': Federaufnahmen Schleifkontaktträger
- 24, 24': Abstandsgleitstücke
- 25, 25': Rastnasen
- 26, 26': Rastöffnungen
- L: Längsrichtung Schleifleitung
- Q: Richtung quer zur Längsrichtung in Verfahrebene
- Z: Zustellrichtung Schleifkontakte senkrecht zur Verfahrebene

## Patentansprüche

1. Stromabnehmer (10) mit mindestens einem Schleifkontakt (12, 12') zur elektrischen Kontaktierung eines Leiterprofils (3) einer Schleifleitung (2) und mindestens einer Antenne (13) zum Eingriff in einen in eine Längsrichtung (L) der Schleifleitung (2) verlaufenden Längsschlitz (6) des Leiterprofils (3), wobei der Schleifkontakt (12, 12') und die Antenne (13) gemeinsam mittels einer Zustellvorrichtung des Stromabnehmers (10) in eine Zustellrichtung (Z) zum Leiterprofil (3) hin bewegbar sind, wobei die Antenne (13) in Zustellrichtung (Z) gegenüber dem Schleifkontakt (12, 12') beweglich am Stromabnehmer (10) gelagert ist, **dadurch gekennzeichnet, dass** zwischen Schleifkontakt (12, 12') und Antenne (13) mindestens ein Ausgleichselement (22, 22') vorgesehen ist, das die Antenne (13) in Zustellrichtung (Z) zur Schleifleitung (2) hin drückt, wobei die Antenne (13) in einem in Zustellrichtung (Z) gegenüber dem Schleifkontakt (12, 12') beweglichen Antennenhalter (19) angeordnet ist, und wobei an dem Antennenhalter (19) mindestens ein Abstandselement (24, 24') zum Gleiten oder Rollen an dem Leiterprofil (3) angeordnet ist.

2. Stromabnehmer (10) nach Anspruch 1, **dadurch gekennzeichnet, dass** an dem Antennenhalter (19) zwei auf einander gegenüberliegenden Seiten seitlich der Antenne (13) angeordnete Abstandsgleitstücke (24, 24') angeordnet sind.

3. Stromabnehmer (10) nach Anspruch 2, **dadurch gekennzeichnet, dass** die Abstandsgleitstücke (24, 24') abgeschrägte Stirnseiten aufweisen.

4. Stromabnehmer (10) nach einem der voranstehenden Ansprüche, **dadurch gekennzeichnet, dass** der Schleifkontakt (12, 12') in einem Schleifkontaktträger (11) angeordnet ist, wobei das Ausgleichselement (22, 22') zwischen Schleifkontaktträger (11) und Antenne (13) und/oder Antennenhalter (19) vorgesehen ist.

5. Stromabnehmer (10) nach Anspruch 4, **dadurch gekennzeichnet, dass** das Ausgleichselement mindestens ein elastisches Ausgleichselement und/oder eine Ausgleichsfeder (22, 22') umfasst.

6. Stromabnehmer (10) nach einem der voranstehenden Ansprüche, **dadurch gekennzeichnet, dass** die Zustellvorrichtung bei Auslenkung des Schleifkontakts (12, 12') aus seiner Kontaktstellung am Leiterprofil (3) in Zustellrichtung (Z) vom Leiterprofil (3) weg eine Rückstellkraft auf den Schleifkontakt (12, 12') in Zustellrichtung zum Leiterprofil (3) hin ausübt.

7. Stromabnehmer (10) nach Anspruch 6, **dadurch gekennzeichnet, dass** die Zustellvorrichtung einen Federarm aufweist.

8. Stromabnehmer (10) nach einem der voranstehenden Ansprüche, **dadurch gekennzeichnet, dass** die Antenne (13) zumindest in ihrem zum Eingreifen in den Längsschlitz (6) vorgesehenen Bereich von einer elektrisch isolierenden Schutzhülle (14) umgeben ist.

9. Stromabnehmer (10) nach einem der voranstehenden Ansprüche, **dadurch gekennzeichnet, dass** die Zustellrichtung (Z) senkrecht auf einer durch die Längsrichtung (L) verlaufenden Verfahrebene des Stromabnehmers (10) verläuft.

10. Schleifleitung (2) mit einem in eine Längsrichtung (L) verlaufenden Leiterprofil (3) mit einem länglichen Hohlraum (5) und einem sich daran anschließenden, in Längsrichtung (L) verlaufenden Längsschlitz (6), wobei das Leiterprofil (3) mindestens eine Schleifkontaktnut (8, 8') für mindestens einen Schleifkontakt (12, 12') eines Stromabnehmers (10) eines längs der Schleifleitung (2) verfahrbaren elektrischen Verbrauchers aufweist, **dadurch gekennzeichnet, dass** das Leiterprofil (3) mindestens eine in Längsrichtung (L) verlaufende Abstandsgleitfläche (9, 9') für mindestens ein Abstandselement (24, 24') des nach einem der voranstehenden Ansprüche ausgebildeten Stromabnehmers (10) aufweist.

11. Schleifleitung (2) nach Anspruch 10, **dadurch gekennzeichnet, dass** zwei Abstandsgleitflächen (9, 9') auf einander gegenüberliegenden Seiten seitlich des Längsschlitzes (6) angeordnet sind.

12. Schleifleitung (2) nach Anspruch 11, **dadurch gekennzeichnet, dass** die Abstandsgleitflächen (9, 9') schräg vom Längsschlitz (6) weg verlaufen.

13. Schleifleitung (2) nach einem der Ansprüche 10 bis 12, **dadurch gekennzeichnet, dass** der Hohlraum (5) und der Längsschlitz (6) einen Schlitzhohlleiter (4) ausbilden.

14. Schleifleitungssystem (1) mit einer Schleifleitung (2) mit einem in eine Längsrichtung (L) verlaufenden Leiterprofil (3) mit einem länglichen Hohlraum (5) und einem sich daran anschließenden, in Längsrichtung (L) verlaufenden Längsschlitz (6), und mit einem Stromabnehmer (10) mit mindestens einer Antenne (13) zum Eingriff in den Längsschlitz (6) und mindestens einem Schleifkontakt (12, 12') zur elektrischen Kontaktierung des Leiterprofils (3),
wobei der Schleifkontakt (12, 12') und die Antenne (13) gemeinsam mittels einer Zustellvorrichtung des Stromabnehmers (10) in eine Zustellrichtung (Z) zum Leiterprofil (3) hin bewegbar sind, wobei die Antenne (13) in Zustellrichtung (Z) gegenüber dem Schleifkontakt (12, 12') beweglich am Stromabnehmer (10) gelagert ist, **dadurch gekennzeichnet, dass** zwischen Schleifkontakt (12, 12') und Antenne (13) mindestens ein Ausgleichselement (22, 22') vorgesehen ist, das die Antenne (13) in Zustellrichtung (Z) zur Schleifleitung (2) hin drückt, wobei die Antenne (13) in einem in Zustellrichtung (Z) gegenüber dem Schleifkontakt (12, 12') beweglichen Antennenhalter (19) angeordnet ist, und wobei an dem Antennenhalter (19) mindestens ein Abstandselement (24, 24') zum Gleiten oder Rollen an dem Leiterprofil (3) angeordnet ist.

## Claims

1. Current collector (10) having at least one sliding contact (12, 12') for making electrical contact with a conductor profile (3) of a conductor rail (2) and at least one antenna (13) for engagement in a longitudinal slot (6) of the conductor profile (3) running in a longitudinal direction (L) of the conductor rail (2), wherein the sliding contact (12, 12') and the antenna (13) can be moved together by means of a feed device of the current collector (10) in a feed direction (Z) towards the conductor profile (3), wherein the antenna (13) is mounted on the current collector (10) to be movable in feed direction (Z) with respect to the sliding contact (12, 12'), **characterised in that** at least one compensating element (22, 22'), which presses the antenna (13) in feed direction (Z) towards the conductor rail (2), is provided between sliding contact (12, 12') and antenna (13), wherein the antenna (13) is arranged in an antenna holder (19) movable with respect to the sliding contact (12, 12') in feed direction (Z), and wherein at least one spacer element (24, 24') is arranged on the antenna holder (19) for sliding or rolling on the conductor profile (3).

2. Current collector (10) according to claim 1, **characterised in that** two spacer slides (24, 24') arranged laterally of the antenna (13) on sides opposite one another, are arranged on the antenna holder (19).

3. Current collector (10) according to claim 2, **characterised in that** the spacer slides (24, 24') have bevelled end-face sides.

4. Current collector (10) according to one of the preceding claims, **characterised in that** the sliding contact (12, 12') is arranged in a sliding contact support (11), wherein the compensating element (22, 22') is provided between sliding contact support (11) and antenna (13) and/or antenna holder (19).

5. Current collector (10) according to claim 4, **characterised in that** the compensating element comprises at least one elastic compensating element and/or one compensating spring (22, 22').

6. Current collector (10) according to one of the preceding claims, **characterised in that** the feed device, on deflection of the sliding contact (12, 12') from its contact position on the conductor profile (3) in feed direction (Z) away from the conductor profile (3), exerts a restoring force on the sliding contact (12, 12') in feed direction towards the conductor profile (3).

7. Current collector (10) according to claim 6, **characterised in that** the feed device has a spring arm.

8. Current collector (10) according to one of the preceding claims, **characterised in that** the antenna (13) is surrounded by an electrically insulating protective cover (14) at least in its region provided for engagement in the longitudinal slot (6).

9. Current collector (10) according to one of the preceding claims, **characterised in that** the feed direction (Z) runs perpendicularly on a movement plane of the current collector (10) running through the longitudinal direction (L).

10. Conductor rail (2) with a conductor profile (3) running in a longitudinal direction (L) with an elongate cavity (5) and a longitudinal slot (6) connected thereto running in longitudinal direction (L), wherein the conductor profile (3) has at least one sliding contact groove (8, 8') for at least one sliding contact (12, 12') of a current collector (10) of an electrical load which can be moved along the conductor rail (2), **characterised in that** the conductor profile (3) has at least one spacer sliding surface (9, 9') running in longitudinal direction (L) for at least one spacer element (24, 24') of the current collector (10) designed according to one of the preceding claims.

11. Conductor rail (2) according to claim 10, **characterised in that** two spacer sliding surfaces (9, 9') are arranged laterally of the longitudinal slot (6) on sides opposite one another.

12. Conductor rail (2) according to claim 11, **characterised in that** the spacer sliding surfaces (9, 9') run away obliquely from the longitudinal slot (6).

13. Conductor rail (2) according to one of claims 10 to 12, **characterised in that** the cavity (5) and the longitudinal slot (6) form a slotted hollow conductor (4).

14. Conductor rail system (1) having a conductor rail (2) with a conductor profile (3) running in a longitudinal direction (L) with an elongate cavity (5) and a longitudinal slot (6) connected thereto running in longitudinal direction (L), and with a current collector (10) having at least one antenna (13) for engagement in the longitudinal slot (6) and at least one sliding contact (12, 12') for making electrical contact with the conductor profile (3), wherein the sliding contact (12, 12') and the antenna (13) can be moved together by means of a feed device of the current collector (10) in a feed direction (Z) towards the conductor profile (3), wherein the antenna (13) is mounted on the current collector (10) to be movable in feed direction (Z) with respect to the sliding contact (12, 12'), **characterised in that** at least one compensating element (22, 22'), which presses the antenna (13) in feed direction (Z) towards the conductor rail (2), is provided between sliding contact (12, 12') and antenna (13), wherein the antenna (13) is arranged in an antenna holder (19) movable with respect to the sliding contact (12, 12') in feed direction (Z), and wherein at least one spacer element (24, 24') is arranged on the antenna holder (19) for sliding or rolling on the conductor profile (3).

## Revendications

1. Collecteur de courant (10) avec au moins un contact à glissement (12, 12') pour établir un contact électrique entre un profil conducteur (3) d'une ligne de contact (2) et au moins une antenne (13) destinée à venir en prise avec une entaille longitudinale (6), s'étendant dans une direction longitudinale (L) de la ligne de contact (2), du profil conducteur (3), dans lequel le contact à glissement (12, 12') et l'antenne (13) peuvent être déplacés conjointement au moyen d'un dispositif d'avancement du collecteur de courant (10) dans une direction d'avancement (Z) en direction du profil conducteur (3), dans lequel l'antenne (13) est montée sur le collecteur de courant (10) de manière mobile par rapport au contact à glissement (12, 12') dans la direction d'avancement (Z), **caractérisé en ce qu'**est prévu entre le contact à glissement (12, 12') et l'antenne (13) au moins un élément de compensation (22, 22'), qui pousse l'antenne (13) dans la direction d'avancement (Z) en direction de la ligne de contact (2), dans lequel l'antenne (13) est disposée dans un support d'antenne (19) mobile dans la direction d'avancement (Z) par rapport au contact à glissement (12, 12'), et dans lequel au moins un élément d'espacement (24, 24') destiné à glisser ou à rouler sur le profil conducteur (3) est disposé sur le support d'antenne (19).

2. Collecteur de courant (10) selon la revendication 1, **caractérisé en ce que** deux pièces de glissement d'espacement (24, 24') disposées sur des côtés se faisant face à côté de l'antenne (13) sont disposées sur le support d'antenne (19).

3. Collecteur de courant (10) selon la revendication 2, **caractérisé en ce que** les pièces de glissement d'espacement (24, 24') présentent des côtés frontaux chanfreinés.

4. Collecteur de courant (10) selon l'une quelconque des revendications précédentes, **caractérisé en ce que** le contact à glissement (12, 12') est disposé dans un support de contact à glissement (11), dans lequel l'élément de compensation (22, 22') est prévu entre le support de contact à glissement (11) et l'antenne (13) et/ou le support d'antenne (19).

5. Collecteur de courant (10) selon la revendication 4, **caractérisé en ce que** l'élément de compensation comprend au moins un élément de compensation élastique et/ou un ressort de compensation (22, 22').

6. Collecteur de courant (10) selon l'une quelconque des revendications précédentes, **caractérisé en ce que** le dispositif d'avancement exerce une force de rappel sur le contact à glissement (12, 12') dans la direction d'avancement en direction du profil conducteur (3) lors de la déviation du contact à glissement (12, 12') hors de sa position de contact sur le profil conducteur (3) dans la direction d'avancement (Z) de manière à s'éloigner du profil conducteur (3).

7. Collecteur de courant (10) selon la revendication 6, **caractérisé en ce que** le dispositif d'avancement présente un bras de ressort.

8. Collecteur de courant (10) selon l'une quelconque des revendications précédentes, **caractérisé en ce que** l'antenne (13) est entourée par une enveloppe de protection (14) électriquement isolante au moins dans sa zone prévue pour venir en prise avec l'entaille longitudinale (6).

9. Collecteur de courant (10) selon l'une quelconque des revendications précédentes, **caractérisé en ce que** la direction d'avancement (Z) s'étend de manière perpendiculaire sur un plan de déplacement, s'étendant à travers la direction longitudinale (L), du collecteur de courant (10).

10. Ligne de contact (2) avec un profil conducteur (3) s'étendant dans une direction longitudinale (L) avec un espace creux allongé (5) et une entaille longitudinale (6) s'y raccordant, s'étendant dans la direction longitudinale (L), dans laquelle le profil conducteur (3) présente au moins une rainure de contact à glissement (8, 8') pour l'au moins un contact à glissement (12, 12') d'un collecteur de courant (10) d'un consommateur électrique pouvant être déplacé le long de la ligne de contact (2), **caractérisée en ce que** le profil conducteur (3) présente au moins une surface de glissement d'espacement (9, 9') s'étendant dans la direction longitudinale (L) pour au moins un élément d'espacement (24, 24') du collecteur de courant (10) réalisé selon l'une quelconque des revendications précédentes.

11. Ligne de contact (2) selon la revendication 10, **caractérisée en ce que** deux surfaces de glissement d'espacement (9, 9') sont disposées sur des côtés se faisant face à côté de l'entaille longitudinale (6).

12. Ligne de contact (2) selon la revendication 11, **caractérisée en ce que** les surfaces de glissement d'espacement (9, 9') s'étendent à l'oblique de manière à s'éloigner de l'entaille longitudinale (6).

13. Ligne de contact (2) selon l'une quelconque des revendications 10 à 12, **caractérisée en ce que** l'espace creux (5) et l'entaille longitudinale (6) réalisent un conducteur creux à entaille (4).

14. Système à ligne de contact (1) avec une ligne de contact (2) avec un profil conducteur (3) s'étendant dans une direction longitudinale (L) avec un espace creux allongé (5) et une entaille longitudinale (6) s'y raccordant, s'étendant dans la direction longitudinale (L), et avec un collecteur de courant (10) avec au moins une antenne (13) destinée à venir en prise avec l'entaille longitudinale (6) et au moins un contact à glissement (12, 12') pour établir un contact électrique entre le profil conducteur (3), dans laquelle le contact à glissement (12, 12') et l'antenne (13) peuvent être déplacés conjointement au moyen d'un dispositif d'avancement du collecteur de courant (10) dans une direction d'avancement (Z) en direction du profil conducteur (3), dans lequel l'antenne (13) est montée sur le collecteur de courant (10) de manière mobile dans la direction d'avancement (Z) par rapport au contact à glissement (12, 12'), **caractérisé en ce qu'**est prévu entre le contact à glissement (12, 12') et l'antenne (13) au moins un élément de compensation (22, 22'), qui pousse l'antenne (13) dans la direction d'avancement (Z) en direction de la ligne de contact (2), dans laquelle l'antenne (13) est disposée dans un support d'antenne (19) mobile par rapport au contact à glissement (12, 12') dans la direction d'avancement (Z), et dans laquelle au moins un élément d'espacement (24, 24') destiné à glisser ou à rouler sur le profil conducteur (3) est disposé sur le support d'antenne (19) .
